# EUROPEAN PATENT APPLICATION

(11) **EP 1 047 052 A2**
(43) Date of publication of application: **25.10.2000**
(21) Application number: 00303395.8
(22) Date of filing: 20.04.2000
(51) Int. Cl.: G11B 7/12

(54) **Compatible optical pickup for DVD-RAM reproduction**

(30) Priority: 20.04.1999 KR 9913929
(71) Applicant: SAMSUNG ELECTRONICS CO., LTD., Suwon-City, Kyungki-do (KR)
(72) Inventor: Kim, Geon-soo, Kwacheon-city, Kyungki-do (KR)
(74) Representative: Chugg, David John

(57) **Abstract**

An optical pickup capable of reproducing information from a digital versatile disc random access memory (DVD-RAM), in addition to being compatible with the compact disc (CD) family media and digital versatile disc read only memory (DVD-ROM). The compatible optical pickup includes: a first light source (111) for emitting a first light having a predetermined wavelength; a second light source (121) for emitting a second light having a long wavelength relative to the first light; an optical path changing portion for changing the traveling path of an incident light; a first grating (113)disposed on the optical path between the first light source (111) and the optical path changing portion, the first grating (113) for diffracting and transmitting the incident light thereto; a second grating (123) disposed on the optical path between the second light source (121) and the optical path changing portion, the second grating (123) for diffracting and transmitting the incident light thereto; an objective lens (131) for condensing the first and second lights onto optical discs having different thicknesses, respectively; and a photodetector (140) for detecting an information signal and error signals from the first and second lights which have been reflected by the optical discs (100) and passed through the optical path changing portion, the photodetector (140) including a first photodetector (141) with four divided regions, a second photodetector (143) with two divided regions, and a third photodetector (145) with two divided regions, the second (143) and third (145) photodetectors being disposed at both sides of the first photodetector (141), wherein a tracking error signal with respect to optical discs having different thicknesses is detected by a differential push-pull (DPP) method.

## Description

The present invention relates to optical pickups capable of adopting disc type recording media having different formats, and more particularly, to a compatible optical pickup for a member of the compact disc (CD) family media and a digital versatile disc read only memory (DVD-ROM), which is also capable of reproducing information from a digital versatile disc random access memory (DVD-RAM).

Recently, the need for an optical pickup capable of recording and/or reproducing information on and/or from a DVD-ROM at a high density be compatible with CD family media such as CD, recordable CD (CD-R), CD rewritable (CD-RW), CD interactive (CD-I) and CD plus graphics (CD+G) has arisen.

The standard thickness of existing CD family media is 1.2 mm, whereas the thickness of DVDs has been standardized to 0.6 mm in consideration of the allowable error in the tilt angle of a disc and the numerical aperture (NA) of an objective lens. Accordingly, when recording or reproducing information on or from a CD using an optical pickup for DVDs, spherical aberrations occur due to a difference in the thicknesses therebetween. Such spherical aberration cannot provide a light intensity sufficient for recording an information (radio frequency) signal or may deteriorate the signal reproduced from the CD. Also, DVDs and CD family media utilize different wavelengths of light for reproduction: CDs use light having a wavelength of about 780nm as a light source for reproduction, whereas DVDs use light having a wavelength of about 650nm as a light source therefor. Thus, for the compatibility with CDs, an optical pickup adopting a light source capable of emitting different wavelengths of light, and a structure in which optical spots can be formed at different focal positions is required.

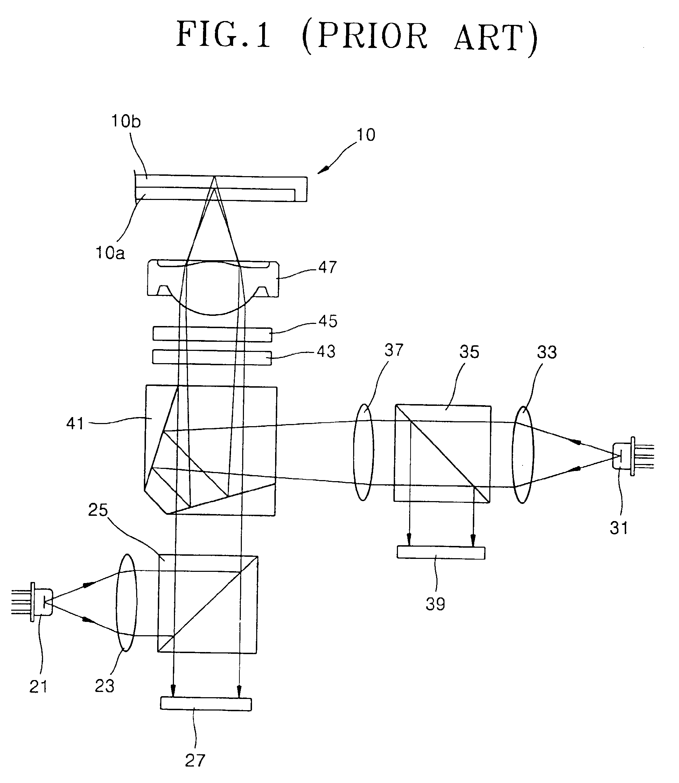

Referring to Figure 1, a conventional compatible optical pickup comprises a first light source 21 for emitting light having a wavelength of about 650nm and a second light source 31 for emitting light having a wavelength of about 780nm. The first light source 21 is appropriate for a DVD 10a, which is a relatively thin disc, and the second light source 31 is appropriate for a CD 10b, which is a relatively thick disc. The first and second light sources 21 and 31 are selectively driven according to the type of adopted optical disc, a DVD or a CD.

Light emitted from the first light source 21 is condensed by a first collimator lens 23, parallel incident onto a first polarization beam splitter (PBS) 25, and then reflected by the first PBS 25 toward the DVD 10a. After reflected by the DVD 10a, the reflected light is transmitted through the first PBS 25 and is then received by a first photodetector 27. Here, an interference filter 41 for changing the paths of light emitted from the first and second light sources 21 and 31, a 1/4-wavelength plate 43 for delaying the phase of light incident thereto to change the polarization characteristic, a variable diaphragm 45, and an objective lens 47 for condensing light incident thereto are situated on an optical path between the first PBS 25 and the disc 10.

Light emitted from the second light source 31 is condensed by a second collimator lens 33, parallel incident onto a second PBS 35, transmitted through a condenser lens 37, and then incident onto the interference filter 41. The light is reflected by the interference filter 41 and passes through the 1/4-wavelength plate 43, the variable diaphragm 45 and the objective lens 47 in sequence to form an optical spot on the CD 10b.

Light reflected by the CD 10b is incident onto the interference filter 41 through the objective lens 47, the variable diaphragm 45 and the 1/4-wavelength plate 43, and then reflected by the interference filter 41 heading toward the second PBS 35. The light is reflected by the second PBS 35 and received by a second photodetector 39.

The interference filter 41, an optical element for transmitting or reflecting incident light depending on the wavelength of the incident light, transmits the light emitted from the first light source 21 and reflects the light emitted from the second light source 31.

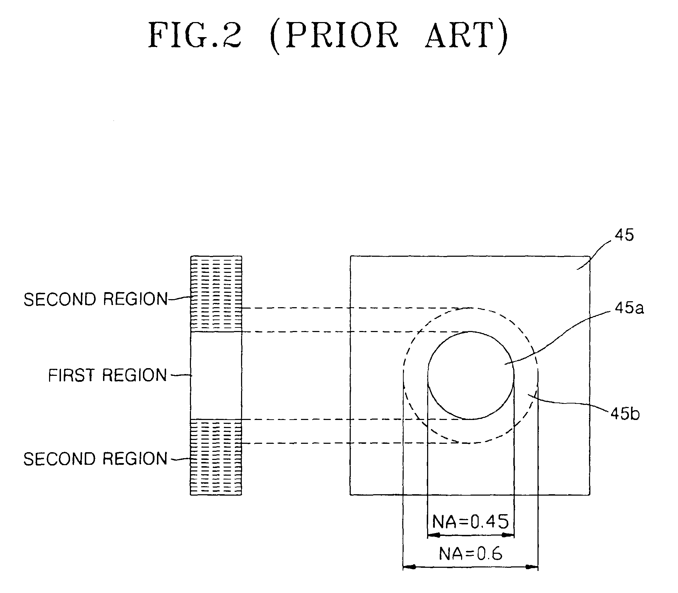

Referring to Figure 2, the variable diaphragm 45 comprises a first region 45a, which is variable in size, and a second region 45b bounding the first region 45a, and selectively transmits the light incident onto a region of the objective lens 27 having a NA of 0.6 or less. The first region 45a, which corresponds to a region of the objective lens 47 having a NA of 0.45 or less, completely transmits the light emitted from the first and second light sources 21 and 31. The second region 45b, which corresponds to a region of the objective lens having a NA of 0.45 to 0.6, completely transmits light having a wavelength of 650nm and completely reflects light having a wavelength of 780nm.

The conventional compatible optical pickup adopting the variable diaphragm having first and second regions, which is manufactured through sophisticated and expensive processes, makes assembling of such optical pickup complicate and increases the manufacturing cost.

Although the conventional optical pickup is compatible for CD family media, it is not comparable with DVD-RAMs, which are high-density recording and reproducing media, due to the lack of the optical configuration for DVD-RAMs. In DVD-RAMs, the optical signal is inherently offset due to the recording or accessing operation, or by the tilt of the optical recording medium. However, the problem of offset cannot be eliminated by a differential phase detection method, which was used for tracking servo in a conventional apparatus for DVD-RAM reproduction, which results in abnormal reproduction from the DVD-RAM.

It is an aim of embodiments of the present invention to provide a compatible optical pickup capable of reproducing information from a digital versatile disc random access memory (DVD-RAM), in addition to being compatible with the compact disc (CD) family media and digital versatile disc read only memory (DVD-ROM).

According to a first aspect of the present invention, there is provided a compatible optical pickup comprising: a first light source for emitting a first light having a predetermined wavelength; a second light source for emitting a second light having a long wavelength relative to the first light; an optical path changing means for changing the traveling path of an incident light; a first grating disposed on the optical path between the first light source and the optical path changing means, the first grating being arranged for diffracting and transmitting the incident light thereto; a second grating disposed on the optical path between the second light source and the optical path changing means, the second grating being arranged for diffracting and transmitting the incident light thereto; an objective lens for condensing the first and second lights onto optical discs having different thicknesses, respectively; and a photodetector for detecting an information signal and error signals from the first and second lights which have been reflected by the optical discs and passed through the optical path changing means, the photodetector including a first photodetector with four divided regions, a second photodetector with two divided regions, and a third photodetector with two divided regions, the second and third photodetectors being disposed at either side of the first photodetector, wherein a tracking error signal with respect to optical discs having different thicknesses is detected by a differential push-pull (DPP) method.

Preferably, the optical path changing means comprises: a first beam splitter disposed on the optical path between the first grating and the objective lens, for changing the traveling path of the first light from the first light source; and a second beam splitter disposed on the optical path between the first beam splitter and the objective lens, for changing the optical paths of the first and second lights.

The pickup may comprise a collimator lens disposed on the optical path between the optical path changing means and the objective lens, for condensing and transmitting the incident light.

According to a second aspect of the invention ,there is provided a compatible optical pickup for digital versatile disc random access memories (DVD-RAMs) reproduction, comprising: a first light source for emitting a first light having a wavelength of approximately 650 nm; a second light source for emitting a second light having a wavelength of approximately 780 nm; an objective lens for condensing the first light onto optical digital versatile discs including a digital versatile disc read only memory (DVD-ROM) and a DVD-RAM each having a thickness of about 0.6 mm, and the second light onto optical compact disc (CD) family media having a thickness of about 1.2 mm; a first beam splitter disposed on the optical path between the first light source and the objective lens, for changing the traveling path of the first light from the first light source; a second beam splitter disposed on the optical path between the first beam splitter and the objective lens, for changing the traveling paths of the first and second lights; a first grating disposed on the optical path between the first light source and the first beam splitter, for diffracting and transmitting the incident light to be at least three light beams; and a second grating disposed on the optical path between the second light source and the second beam splitter, for diffracting and transmitting the incident light to be at least three light beams; and a photodetector for detecting an information signal and error signals from the first and second lights which have been reflected by the optical discs and passed through the second and first beam splitters, the photodetector including a first photodetector with four divided regions A, B, C and D, a second photodetector with two divided regions E1 and E2, and a third photodetector with two divided regions F1 and F2, the second and third photodetectors being disposed at either side of the first photodetector, and each of the divided regions for receiving and photoelectrically converting the received light signal, wherein the first light is diffracted to be at least three light beams and received by the plurality of divided regions of the photodetectors to detect a tracking error signal by a differential push-pull method.

A collimator lens is preferably disposed on the optical path between the second beam splitter and the objective lens, for condensing and transmitting the incident light thereto.

For a better understanding of the invention, and to show how embodiments of the same may be carried into effect, reference will now be made, by way of example, to the accompanying diagrammatic drawings in which:
Figure 1 is a schematic view showing the optical arrangement of a conventional compatible optical pickup;
Figure 2 illustrates the variable diaphragm of Figure 1;
Figure 3 is a schematic view showing the optical arrangement of a compatible optical pickup for DVD-RAM reproduction according to a preferred embodiment of the present invention; and
Figure 4 is a plan view showing the configuration of the photodetector of Figure 3.

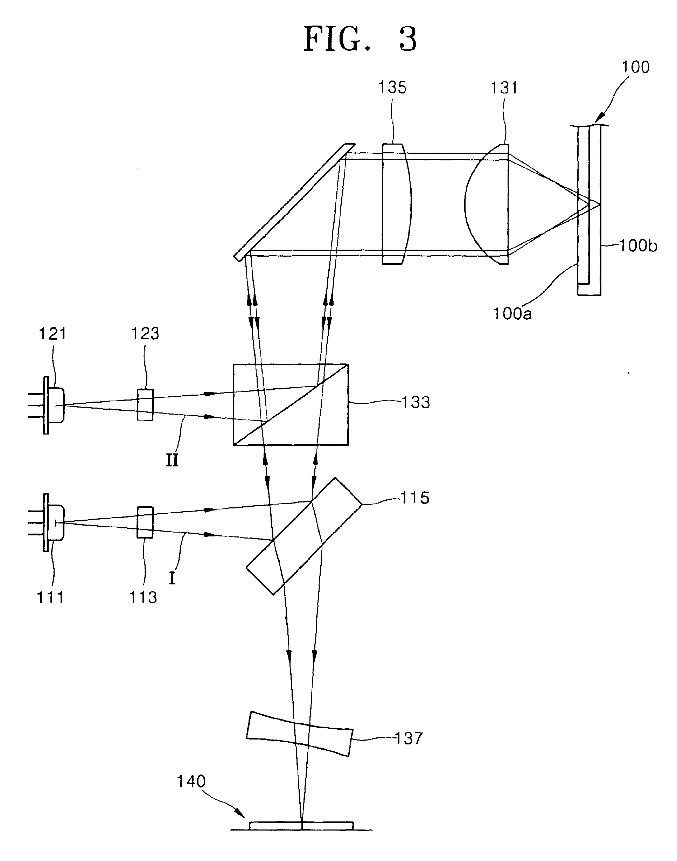

Referring to Figure 3, a preferred embodiment of an optical pickup according to the present invention includes first and second light sources 111 and 121 for emitting light having different wavelengths, an optical path changing means for changing the path of an incident light, an objective lens 131 for condensing the incident light so as to form an optical spot on an optical disc 100, and a photodetector 141 for detecting an information (radio frequency) signal and an error signal from the incident light which is reflected by the optical disc 100 and passes through the optical path changing means.

The first light source 111 emits a first light I having a wavelength of about 650nm. The emitted first light I is used to reproduce information from a relatively thin disc 100a such as a digital versatile disc read only memory (DVD-ROM) and a digital versatile disc random access memory (DVD-RAM). Also, the second light source 121 emits a second light II having a wavelength of about 780nm, and the emitted second light II is used to record or reproduce information on or from a relatively thick optical disc 100b such as the compact disc (CD) family media.

A first grating 113 for diffracting and transmitting the incident light is disposed on the optical path between the first light source 111 and the optical path changing means. The first grating 113 is provided to allow tracking servo by a differential push-pull method (DPP). Also, a second grating 123 for detecting a tracking error signal by a three-beam method is disposed on the optical path between the second light source 121 and the optical path changing means. The first and second gratings 113 and 123 diffract and transmit the light beams emitted from the first and second light sources 111 and 121, respectively, to be at least 0^{th} and ±1^{st}-order light.

The optical path changing means includes a first beam splitter 115 for changing the traveling path of the first light I emitted from the first light source 111, and a second beam splitter 133 disposed between the first beam splitter 115 and the objective lens 131, for changing the traveling path of the light incident thereto.

The first beam splitter 115 makes the first light I incident from the first light source 111 toward the optical disc 100, and the first and second lights I and II, which have been reflected by the optical disc 100, toward the photodetector 140.

The second beam splitter 133 changes the traveling paths of the light incident thereto by partially transmitting or reflecting the first and second lights I and II incident thereto. In the case of having the optical arrangement shown in Figure 3, the second beam splitter 133 reflects a portion of the second light II emitted from the second light source 121 such that it heads toward the optical disc 100, and transmits the rest of the second light II. Also, the second beam splitter 133 transmits a portion of the first light I emitted from the first light source 111 such that it heads toward the optical disc 100, and reflects the rest of the first light I. The second beam splitter 133 transmits a portion of the light, which has been reflected by the optical disc 100, such that it heads toward the photodetector 140.

The objective lens 131 has an NA appropriate for the DVD format, for example, an NA of 0.6, and condenses the first and second lights I and II to form a light spot, respectively, on the optical discs 100a and 100b. In order to condense the first and second lights I and II onto each recording surface of the optical discs 100a and 100b having different thicknesses, an annular shielding lens may be adopted as the objective lens 131, or an additional optical control means may be further included. Such an annular shielding lens and optical control means were suggested by the instant applicant in US Patent Nos. 5,665,957; 5,822,135; 5,909,424; and 5,987,924, and these patents are incorporated by references herein.

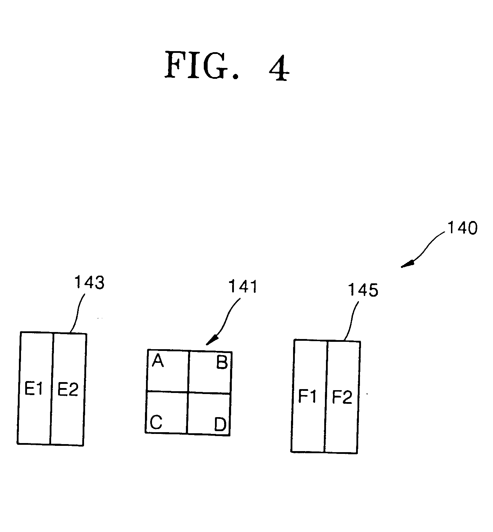

The photodetector 140 receives the light reflected by the optical disc 100a or 100b through the objective lens 131, the second and first beam splitters 133 and 115, and a light-receiving lens 137. The light-receiving lens 137, which is disposed between the first beam splitter 115 and the photodetector 140, causes astigmatism which enables a focusing error detection by an astigmatism method. The photodetector 140 detects error and RF signals from the received light. The optical configuration of the photodetector 140 is shown in Figure 4.

Referring to Figure 4, the photodetector 140 includes a first photodetector 141, and second and third photodetectors 143 and 145 which are disposed at both sides of the first photodetector 141. The first photodetector 141 consists of four divided regions A, B, C and D, the second photodetector 143 consists of two divided regions E1 and E2, and the third photodetector 145 consists of two divided regions F1 and F2. This configuration of the photodetector 140 is for detecting error signals by a differential push-pull (DPP) method.

With respect to both the optical discs 100a and 100b, the photodetector 140 detects a tracking error signal by the DPP method and a focusing error signal by an astigmatism method. The detection of the tracking error signal by the DPP can prevent possible tracking offset due to differences in optical distribution and reflectivity. Here, the difference in optical distribution occurs by tilting of optical discs and shifting of the objective lens 131, and the difference in reflectivity occurs when one of ± 1^{st} order diffracted beams from the second grating 123 is focused onto a data recorded area while the other thereof is focused onto a non-data recorded area during a writing operation. As mentioned previously, since the tracking error signal can be detected by the DPP method even from the relatively thin disc 100a, i.e., a DVD-RAM, tracking servo can be performed for the DVD-RAM. As a result, information can be reproduced from the DVD-RAM by the optical pickup according to the present invention.

The compatible optical pickup according to the present invention may further comprise a collimator lens 135. The collimator lens 135 is disposed on the optical path between the second beam splitter 133 and the objective lens 131, and condenses the incident light thereto

The compatible optical pickup for DVD-RAM reproduction according to the present invention with the above configuration adopts the first grating on the optical path between the first light source and the first beam splitter, and the photodetector which is divided into eight regions, so that a tracking error signal can be detected from the DVD-RAM using the DPP method. As a result, the offset of the optical signal during an accessing operation, or by the tilt of the optical recording medium, can be eliminated, and thus information can be reproduced from the DVD-RAM.

While this invention has been particularly shown and described with reference to preferred embodiments thereof, it will be understood by those skilled in the art that various changes in form and details may be made therein without departing from the spirit and scope of the invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A compatible optical pickup comprising:
a first light source (111) for emitting a first light having a predetermined wavelength;
a second light source (121) for emitting a second light having a long wavelength relative to the first light;
an optical path changing means (115, 133) for changing the traveling path of an incident light;
a first grating (113) disposed on the optical path between the first light source (111) and the optical path changing means, the first grating (113) being arranged for diffracting and transmitting the incident light thereto;
a second grating (123) disposed on the optical path between the second light source (121) and the optical path changing means, the second grating (123) being arranged for diffracting and transmitting the incident light thereto;
an objective lens (131) for condensing the first and second lights onto optical discs (100) having different thicknesses, respectively; and
a photodetector (131) for detecting an information signal and error signals from the first and second lights which have been reflected by the optical discs (100) and passed through the optical path changing means (115, 133), the photodetector (140) including a first photodetector (141) with four divided regions, a second photodetector (143) with two divided regions, and a third photodetector (145) with two divided regions, the second and third photodetectors (143, 145) being disposed at either side of the first photodetector (141),
wherein a tracking error signal with respect to optical discs having different thicknesses is detected by a differential push-pull (DPP) method.

2. The compatible optical pickup of claim 1, wherein the optical path changing means comprises:
a first beam splitter (115) disposed on the optical path between the first grating (113) and the objective lens (131), for changing the traveling path of the first light from the first light source (111); and
a second beam splitter (133) disposed on the optical path between the first beam splitter (115) and the objective lens (131), for changing the optical paths of the first and second lights.

3. The compatible optical pickup of claim 1, further comprising a collimator lens (135) disposed on the optical path between the optical path changing means (115, 133) and the objective lens, for condensing and transmitting the incident light.

4. A compatible optical pickup for digital versatile disc random access memories (DVD-RAMs) reproduction, comprising:
a first light source (111) for emitting a first light having a wavelength of approximately 650 nm;
a second light source (121) for emitting a second light having a wavelength of approximately 780 nm;
an objective lens (131) for condensing the first light onto optical digital versatile discs including a digital versatile disc read only memory (DVD-ROM) and a DVD-RAM each having a thickness of about 0.6 mm, and the second light onto optical compact disc (CD) family media having a thickness of about 1.2 mm;
a first beam splitter (115) disposed on the optical path between the first light source (111) and the objective lens (131), for changing the traveling path of the first light from the first light source (111);
a second beam splitter (133) disposed on the optical path between the first beam splitter (115) and the objective lens (131), for changing the traveling paths of the first and second lights;
a first grating (113) disposed on the optical path between the first light source (111) and the first beam splitter (115), for diffracting and transmitting the incident light to be at least three light beams; and
a second grating (123) disposed on the optical path between the second light source (121) and the second beam splitter, for diffracting and transmitting the incident light to be at least three light beams; and
a photodetector (140) for detecting an information signal and error signals from the first and second lights which have been reflected by the optical discs and passed through the second and first beam splitters (133, 115), the photodetector (140) including a first photodetector (141) with four divided regions A, B, C and D, a second photodetector (143) with two divided regions E1 and E2, and a third photodetector (145) with two divided regions F1 and F2, the second and third photodetectors (143, 145) being disposed at either side of the first photodetector (141), and each of the divided regions for receiving and photoelectrically converting the received light signal,
wherein the first light is diffracted to be at least three light beams and received by the plurality of divided regions of the photodetectors (140) to detect a tracking error signal by a differential push-pull method.

5. The compatible optical pickup of claim 4, further comprising a collimator lens (135) disposed on the optical path between the second beam splitter (133) and the objective lens (131), for condensing and transmitting the incident light thereto.
